(19) Europäisches Patentamt / European Patent Office / Office européen des brevets

(11) **EP 3 023 737 B1**

(12) **EUROPÄISCHE PATENTSCHRIFT**

(45) Veröffentlichungstag und Bekanntmachung des Hinweises auf die Patenterteilung:
**27.03.2019 Patentblatt 2019/13**

(51) Int Cl.:
**G01B 11/24** *(2006.01)*     **G01N 21/47** *(2006.01)*
**G01B 11/30** *(2006.01)*

(21) Anmeldenummer: **15194874.2**

(22) Anmeldetag: **17.11.2015**

(54) **VERFAHREN ZUR BERÜHRUNGSLOSEN OBERFLÄCHENMESSUNG MIT MESSKORREKTUR**

METHOD FOR CONTACTLESS SURFACE MEASUREMENT WITH MEASUREMENT CORRECTION

PROCÉDÉ DE MESURE DE SURFACE SANS CONTACT AVEC CORRECTION DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.11.2014 DE 102014116966**

(43) Veröffentlichungstag der Anmeldung:
**25.05.2016 Patentblatt 2016/21**

(73) Patentinhaber: **Brodmann Technologies GmbH**
**76476 Bischweier (DE)**

(72) Erfinder:
• **Brodmann, Rainer**
**76476 Bischweier (DE)**
• **Brodmann, Boris**
**76131 Karlsruhe (DE)**

(74) Vertreter: **Schaumburg und Partner Patentanwälte mbB**
**Postfach 86 07 48**
**81634 München (DE)**

(56) Entgegenhaltungen:
**EP-A1- 0 145 957**     **EP-A1- 0 210 263**

EP 3 023 737 B1

**Beschreibung**

Die Erfindung betrifft ein Verfahren zur berührungslosen Beurteilung der Beschaffenheit einer Oberfläche nach der winkelaufgelösten Streulichtmesstechnik, bei der ein optischer Sensor ein Strahlenbündel mit definierter Intensitätsverteilung auf die zu beurteilende Oberfläche aussendet und die zurückreflektierte Strahlung mittels eines Zeilensensors mit einer diskreten Anzahl von Fotodetektoren in einem definierten Winkelbereich erfasst wird.

Ein solches Verfahren ist aus der VDA-Empfehlung VDA 2009 aus Juli 2010 (VDA Verband der Automobilindustrie) bekannt, und dort ist die winkelaufgelöste Streulichtmesstechnik ausführlich beschrieben. Diese Streulichtmesstechnik eignet sich aufgrund der Robustheit des Verfahrens und der hohen Messgeschwindigkeit sowohl zur 100 % Online-Überwachung eines Prozesses, als auch speziell zur berührungslosen Messung der Rauheit quer zur Bearbeitungsrichtung (Querrauheit) sowie längs zur Bearbeitungsrichtung (Längsrauheit). Gemessen wird hierbei die Winkelverteilung der Oberfläche einer feinbearbeiteten Oberfläche über rückgestreutes Licht. Daraus können sowohl Kennwerte für die Struktur der Oberfläche als auch Formmerkmale wie z.B. Rundheit, Rattermarken etc. berechnet werden. Als Kenngröße zur Beurteilung der Beschaffenheit einer Oberfläche kann z.B. die Varianz der Streuwinkelverteilung Aq als Maß für die Mikrostruktur der Oberfläche verwendet werden. Eine korrekte Messung dieses Kennwerts Aq mit einem optischen Sensor setzt eine senkrechte Beleuchtung der Oberfläche voraus. Bei einer Verkippung des Sensors oder der Oberfläche derart, dass das spiegelnd zurückreflektierte Licht nicht mehr vollständig auf den Zeilensensor auftrifft, kann beispielsweise zu einem fehlerhaften Aq-Kennwert führen. Ähnliches gilt für andere Kenngrößen, wie diese in der VDA 2009 beschrieben sind.

In der DE 10 2014 111 320 (nicht vorveröffentlicht) derselben Anmelderin wurde bereits vorgeschlagen, vor den Zeilensensor eine Zylinderlinse anzuordnen, die zurückreflektiertes Licht, welches normalerweise nicht mehr auf den Zeilensensor auftreffen würde, zu sammeln und dem Zeilensensor zuzuführen. Eine solche Maßnahme erfordert jedoch einen baulichen Eingriff in den optischen Sensor und würde auch dessen Bauvolumen vergrößern.

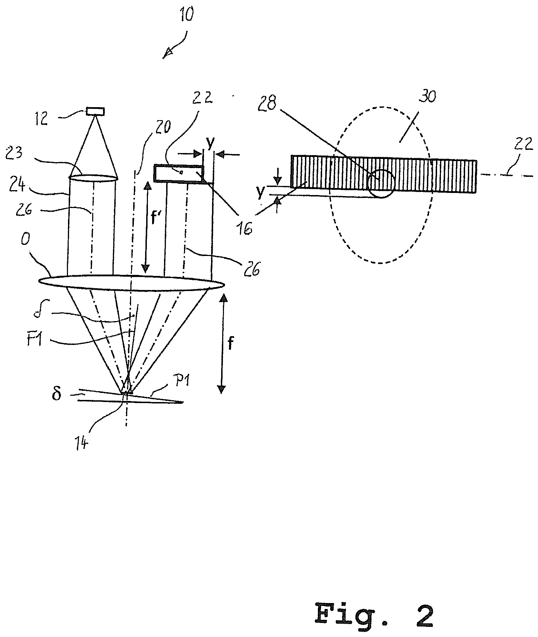

EP 0 210 263 A1 beschreibt eine Vorrichtung und ein Verfahren zur optischen Ermittlung von Gestaltsfehlern niedriger Ordnung, beispielsweise Welligkeit, wobei die winkelaufgelöste Streulichtmesstechnik angewandt wird. In Figur 2 ist zu erkennen, dass ein Neigungswinkel $\alpha$ aus der Streulichtverteilung und damit die Neigung einer Oberflächenwelligkeit am Ort des Messflecks ermittelt werden kann. Diese Neigung ist proportional einem M-Wert, der wiederum proportional zur Schwerpunktlage des Lichtflecks auf der Diodenzeile ist.

EP 0 145 957 A beschreibt ein Verfahren zur optischen Abtastung von Werkstücken nach dem Triangulationsprinzip, bei dem ein Lichtfleck unter einem Winkel auf das Messobjekt projiziert wird, und aus der mit einem positionsempfindlichen Detektor gemessenen Verschiebung des Bildes des Lichtflecks der Abstand zum Objekt bestimmt wird. Mit Hilfe eines Bildanalysegerätes wird zusätzlich die Form bzw. der Flächeninhalt des Lichtflecks gemessen und daraus die Neigung der Objektoberfläche zur Beobachtungsrichtung zwecks Erhöhung der Genauigkeit der Entfernungsbestimmung ermittelt.

Es ist Aufgabe der Erfindung, ein Verfahren zur berührungslosen Beurteilung der Beschaffenheit einer Oberfläche nach der winkelaufgelösten Streulichtmesstechnik anzugeben, bei der auch im Falle einer Verkippung der Oberfläche um einen Winkel quer zur Längsachse des Zeilensensors statistische Kennwerte für die Oberflächenbeschaffenheit ermittelt werden, die sich mit hoher Genauigkeit wahren Kennwerten annähern.

Diese Aufgabe wird durch das im Anspruch 1 definierte Verfahren gelöst. Vorteilhafte Weiterbildungen sind in den abhängigen Ansprüchen angegeben.

Gemäß der Erfindung wird im Falle einer Verkippung der Oberfläche und ihrer Flächennormalen um einen Winkel $\delta$ gegen die Messachse des Sensors

und quer zur Längsachse des Zeilensensors die gemessenen Intensitäten bzw. deren Signale einer vorbestimmten Anzahl von Fotodetektoren abhängig von diesem Winkel $\delta$ rechnerisch korrigiert. Aus den korrigierten Signalen und aus den nicht korrigierten Intensitäten der Fotodetektoren werden sodann statistische Kennwerte für die Oberflächenbeschaffenheit berechnet.

Die Erfindung geht von der Überlegung aus, dass das an glänzenden Oberflächen zurückreflektierte Licht einen spiegelnden (spekularen) Anteil und einen in einem größeren Streuwinkel reflektierten Lichtanteil umfasst. Die wesentliche Information über Rauheit und andere Kennwerte für die Oberflächenbeschaffenheit sind im Streulicht mit größerem Streuwinkel enthalten und weniger im spekularen Lichtanteil. Gerade dieser spekulare Lichtanteil trifft bei einer Verkippung in einem gegenüber Streulicht deutlich verringertem Maße auf den Zeilensensor und wirkt sich dann bei der Berechnung der statistischen Kennwerte als Fehler aus, so dass solche Kennwerte von den wahren Kennwerten für die Oberfläche deutlich abweichen. Bei Kenntnis des Kippwinkels $\delta$ kann der gesamte Anteil an spekularem Licht aus den Intensitäts-Signalen der zugehörigen Fotodetektoren durch Korrektur der jeweiligen Intensitäten rekonstruiert werden, z.B. durch Anhebung dieser Intensitäten um Korrekturfaktoren, als wäre keine Verkippung vorhanden. Der jeweilige Korrekturfaktor kann für die verschiedenen Fotodetektoren unterschiedlich sein. Für die Signale von Fotodetektoren, die Streulicht außerhalb des spekularen Reflexes empfangen, ist bei kleinen Winkeln $\delta$ weniger Lichtverlust vorhanden, so dass für solche Fotodetektoren nicht unbedingt eine Korrektur erfolgen muss.

Es ist auch möglich, für alle Fotodetektoren eine Korrektur der jeweiligen Signale vorzunehmen, um die tatsächliche Streulichtverteilung ohne Verkippung zu rekonstruieren. Jedoch ist dann der zugehörige Softwareaufwand vergrößert und damit auch die Rechenzeit, was zu einer Einschränkung der Abtastrate bei der Online-Beurteilung der Beschaffenheit einer Oberfläche führt. In der Praxis hat sich gezeigt, dass insbesondere die Intensitäts-Signale von denjenigen Fotodetektoren zu korrigieren sind, welche bei ideal reflektierender ebener Oberfläche das gespiegelt reflektierte Strahlenbündel erfassen, wobei die jeweiligen Intensitäten der weiteren Fotodetektoren nicht korrigiert werden müssen. Auf diese Weise wird ein Optimum an Genauigkeit und hoher Abtastrate erreicht.

Eine korrekte Messung statistischer Kennwerte für die Oberflächenbeschaffenheit, wie beispielsweise der Rauheitskennwert Aq, setzt eine senkrechte Beleuchtung der Oberfläche mit dem optischen Sensor voraus. Während ein Kippwinkel zwischen der Oberflächennormalen und der Messachse des Sensors in Richtung Längsachse des Zeilensensors so lange unkritisch ist, wie Streulicht noch in ausreichendem Maße auf den Zeilensensor entlang seiner Längsachse auftrifft, führt ein Kippwinkel $\delta$ zwischen Normale der Oberfläche und Messachse des Sensors in Richtung quer zur Längsachse des Zeilensensors zu einer erheblichen Minderung des reflektierten Lichts, insbesondere des spiegelnden Lichtanteils, welches nicht mehr auf den Zeilensensor auftrifft. Derartige Kippwinkel $\delta$ kommen an gekrümmten Oberflächen mit konvexer oder konkaver Form vor, beispielsweise bei der Online-Messung an feinbearbeiteten Zahnflanken oder an Flanken von Schneckenwellen. Insbesondere bei der Messung der Längsrauheit in Richtung der erfolgten Feinbearbeitung ist ein fortlaufendes Nachführen des Sensors derart, dass seine Messachse mit der Flächennormalen der zu messenden Oberfläche übereinstimmt, schwierig und aufwendig. Bei solchen Anwendungsfällen ist das beschriebene Verfahren sehr vorteilhaft einzusetzen, ohne dass bauliche Veränderungen in der Hardware des optischen Sensors vorgenommen werden müssen.

Bei einem bevorzugten Ausführungsbeispiel werden die gemessenen Intensitäten nur von denjenigen Fotodetektoren korrigiert, die im mittleren Abschnitt des Zeilensensors liegen, vorzugsweise 20 - 50 % der gesamten Anzahl von Fotodetektoren. Im mittleren Abschnitt des Zeilensensors trifft im Allgemeinen der spekulare Lichtanteil des reflektierten Lichtes auf. Beim Verkippen erfolgt eine Minderung der Lichtintensität in diesem Bereich. Durch Beschränken der Korrektur auf eine verringerte Anzahl von Fotodetektoren wird der Zeitaufwand für die durchzuführende Korrektur verringert und die Abtastgeschwindigkeit des optischen Sensors bleibt hoch.

Ein bevorzugtes Ausführungsbeispiel ist dadurch gekennzeichnet, dass Korrekturfaktoren zum Korrigieren der gemessenen Intensitäten von Fotodetektoren durch Einmessen mit verschiedenen Kippwinkeln $\delta$ ermittelt werden. Bei diesem Einmessen oder Kalibrieren werden in einem besonderen Messaufbau für verschiedene Verkippwinkel $\delta$ und mit Hilfe eines Oberflächennormals, beispielsweise eines Endmaßes oder eines Spiegels, zugehörige Streulichtverteilungen von den Fotodetektoren des Zeilensensors erfasst. Hierbei kann das Abfallen der Intensität bei diesen Verkippwinkeln $\delta$ bestimmt und daraus die jeweiligen Korrekturfaktoren für die einzelnen Fotodetektoren ermittelt werden, um die Intensität ohne Verkippung zu rekonstruieren. Diese Korrekturfaktoren werden dann bei der Korrektur der Intensitäts-Signale der Fotodetektoren berücksichtigt.

Bei einem besonders bevorzugten Ausführungsbeispiel werden die Korrekturfaktoren zum Korrigieren der gemessenen Intensitäten von Fotodetektoren durch eine mathematische Modellierung unter der Annahme eines kreisförmigen spekularen Reflexes ermittelt. Aus Kenntnis des Verkippwinkels $\delta$ und einer in etwa gleichförmigen Intensitätsverteilung innerhalb des ausgesendeten Strahlenbündels und des kreisförmigen Reflexes kann die Abnahme der Lichtintensität auf dem Zeilensensor mit relativ hoher Genauigkeit ermittelt werden. Somit können auch mit hoher Genauigkeit Korrekturfaktoren für die Signale der diskreten Fotodetektoren ermittelt werden, ohne dass ein aufwendiges Einmessen erfolgt. Bei bestimmten Oberflächenformen, wie beispielsweise Zahnflanken, ist die Wölbung der Oberfläche bzw. die Krümmung der Oberfläche und auch die Geometrie des Messflecks des vom Sensor ausgesendeten Strahlenbündels genau bekannt. Diese Geometrieverhältnisse gehen dann in das mathematische Modell ein und es kann exakt die Minderung des Reflexes bei verschiedenen Verkippwinkeln $\delta$ berechnet werden. Die daraus ermittelten Korrekturfaktoren für die Intensitäten der verschiedenen Fotodetektoren können auf diese Weise berechnet werden und die daraus ermittelten statistischen Kennwerte für die Oberflächenbeschaffenheit stimmen sehr gut mit den wahren Kennwerten überein.

Ausführungsbeispiele der Erfindung werden nachfolgend anhand der Figuren erläutert, darin zeigt:

Figur 1   schematisch das Streulichtmessprinzip zur Messung der Querrauheit,

Figur 2   das Messprinzip bei einer Verkippung um einen Winkel $\delta$,

Figur 3   schematisch die Auswirkung bei einer Verkippung um $\delta$,

Figur 4   die geometrische Beziehung bei einer Verkippung,

Figur 5   ein Anwendungsbeispiel zur Messung an Zahnflanken, und

Figur 6    ein Vergleich von gemessenen und korrigierten Aq-Kennlinien.

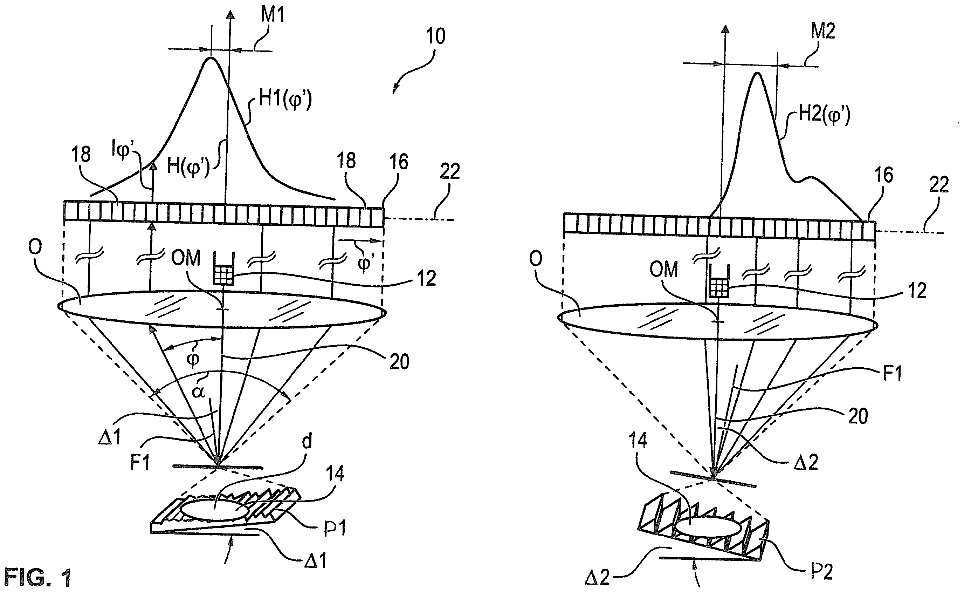

Figur 1 zeigt schematisch das Messprinzip, wie dies beispielsweise auch in der VDA 2009 beschrieben ist. Ein optischer Sensor 10 für die winkelaufgelöste Streulichtmessung umfasst als Lichtquelle 12 eine LED oder einen Halbleiterlaser, die die Oberfläche P1 einer Probe mit einem Strahlenbündel definierter Geometrie und Intensitätsverteilung beleuchtet. Das Strahlenbündel erzeugt auf der Oberfläche einen Messfleck 14, der in etwa kreisrund mit Durchmesser d ist. Das von der Mikrostruktur der Oberfläche P1 rückgestreute Licht wird innerhalb des maximalen messbaren Streuwinkelbereichs $\alpha$ von einem Messobjektiv O erfasst. Ein Zeilensensor 16 umfassend eine diskrete Anzahl von Fotodetektoren 18 (nur zwei Fotodetektoren sind bezeichnet) ist so angeordnet, dass die einzelnen Fotodetektoren 18 zu den diskreten Streuwinkelwerten $\varphi$ die entsprechenden Intensitätswerte I$\varphi$' als elektrische Signale abgeben, die als Digitalwerte weiterverarbeitet werden.

Das Messobjektiv O ist als Fourier-Optik oder f-Theta-Optik ausgebildet und transformiert die Streuwinkel $\varphi$ in einen Weg $\varphi$', der der Position i der einzelnen Fotodetektoren 18 entlang des Zeilensensors 16 entspricht. Somit erhält man entlang der Anordnung der Fotodetektoren 18 mit Intensitäten I$\varphi$' eine Verteilung H1($\varphi$'). Aus dieser Intensitätsverteilung H1($\varphi$') kann durch Normierung die Streuwinkelverteilung H($\varphi$') der Mikrostruktur im Messfleck 14 berechnet werden.

Die Ausrichtung des Sensors 10 mit seiner Messachse 20 ist generell senkrecht zu der zu messenden Oberfläche P1. In diesem Falle stimmen die Flächennormale F1 der Oberfläche P1 und die Messachse 20 überein. Wenn die Flächennormale F1 um einen Winkel $\Delta 1$ gegenüber der Messachse 20 in Richtung der Längsachse 22 des Zeilensensors 16 verkippt ist, so verschiebt sich die Intensitätsverteilung H1($\varphi$') um einen Wert M1 gegenüber der mittleren Lage der Intensitätsverteilung. Diese Verschiebung M1 kann genützt werden, um beispielsweise Welligkeiten oder Unrundheiten der Oberfläche P1 zu bestimmen.

Im linken Bildteil der Figur 1 hat die Oberfläche P1 ein stochastisches Schleifprofil. Im Bildteil rechts hat eine weitere Oberfläche P2 ein asymmetrisches Drehprofil. Entsprechend ergibt sich ein Verlauf der Intensitätsverteilung H2($\varphi$') und infolge eines Verkippwinkels $\Delta 2$ der Flächennormale F1 der Oberfläche P2 gegenüber der Messachse 20 in Richtung der Längsachse 22 des Zeilensensors 16 eine Verschiebung der Streulichtverteilung H2($\varphi$') um M2.

Typische Werte für den Sensor 10 sind für den Durchmesser d des Messflecks 14 etwa 0,3 bis 0,9 mm. Der Öffnungswinkel $\alpha$ des Objektivs O ist zum Beispiel 32°. Eine entsprechende Anzahl von Fotodetektoren 18 ist so gewählt, dass sich eine Auflösung für $\varphi$' von 1° ergibt. Die Anzahl der Messung und Berechnung von Kennwerten ist größer als 1000/Sekunde.

Beim winkelaufgelösten Streulichtverfahren ist ein Vorteil die Unempfindlichkeit gegenüber Abstandsänderungen, die an ebenen Flächen bis zu 2 mm betragen kann. Anhand der mittleren Lage M der Streulichtverteilung H1($\varphi$') kann auch die Lage des Sensors 10 an ebenen Flächen justiert werden. Aus der Intensitätsverteilung H1($\varphi$') kann eine Vielzahl von Kenngrößen ermittelt werden (siehe hierzu VDA 2009), so z.B. die Varianz der Streuwinkelverteilung Aq als Maß für die Mikrostruktur der Oberfläche, die Schiefe der Streuwinkelverteilung Ask als Maß für die Profilschiefe der Mikrostruktur und zahlreiche weitere Einzelkenngrößen und Mehrfachkenngrößen.

Figur 2 zeigt links den Sensor 10 in einer Ansicht, in der die Längsachse 22 des Zeilensensors 16 senkrecht zur Papierebene steht. Das Strahlenbündel 24, welches durch die LED 12 und einer Kollimatorlinse 23 erzeugt wird, durchläuft das Messobjektiv O und erzeugt den Messfleck 14 auf der Oberfläche P1. Das zurück reflektierte Licht wird über das Messobjektiv O mit seinen Brennweiten f = f' auf den Zeilensensor 16 gerichtet. Die Flächennormale F1 der Oberfläche P1 ist um einen Winkel $\delta$ gegenüber der Messachse 20 des Sensors 10 verkippt. Dies bewirkt, dass ein Mittelstrahl 26 des Strahlenbündels 24 auch bei einer ideal reflektierenden Oberfläche P1 nicht mehr mittig auf den Zeilensensor 16 auftrifft, sondern um ein Maß y verschoben ist. Dieses Maß y ergibt sich unmittelbar aus dem Kippwinkel $\delta$. Im Bildteil rechts ist in einer Aufsicht vom Messobjektiv O aus gesehen zu erkennen, dass ein spekularer Reflex 28 teilweise von der aktiven Fläche des Zeilensensors 16 nicht mehr erfasst wird. Das in den gesamten Raumwinkel gestreute Streulicht 30, welches sowieso nicht vom Zeilensensor 16 in seiner Gesamtheit erfasst werden kann, ist in Längsrichtung der Achse 22 des Zeilensensors 16 nahezu noch unverändert vorhanden. Die auf dem Zeilensensor 16 verminderte Intensität des spekularen Reflexes 28 hat zur Folge, dass die Intensitätsverteilung H1 ($\varphi$') stark von einer Verteilung abweicht, die ohne Verkippung ($\delta$ = 0) vorhanden wäre, was bei der weiteren rechentechnischen Auswertung zu fehlerhaften Ergebnissen führt, beispielsweise beim Aq-Wert.

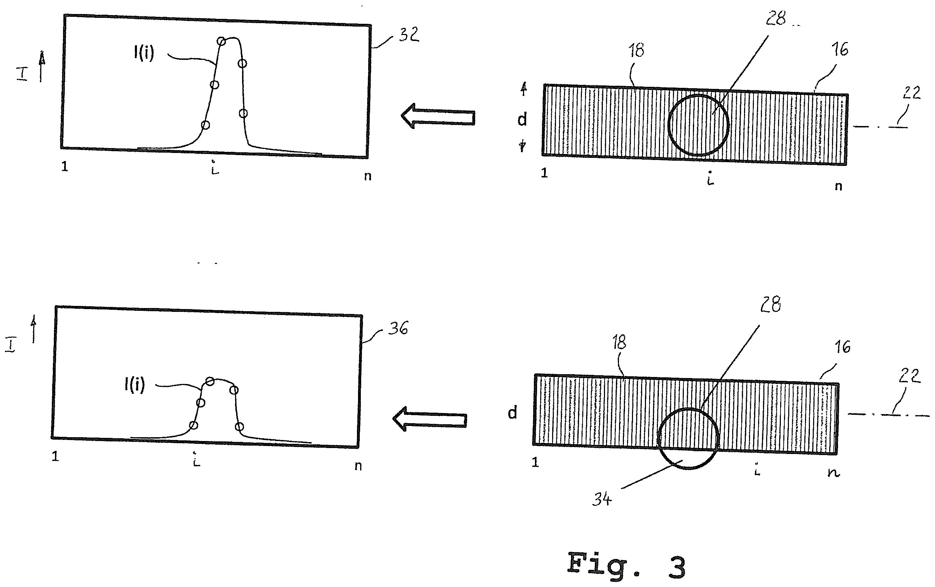

Figur 3 zeigt schematisch den zuvor erläuterten Effekt. Im oberen Bildteil ist dargestellt, dass der spekulare Reflex 28 bei einem Winkel $\delta$ = 0 auf die aktive Fläche des Zeilensensors 16 auftrifft, der 1 bis n Fotodetektoren mit der Laufvariablen i umfasst. Im Normalfall hat der Zeilensensor 16 eine Breite d, die dem Durchmesser d des Messflecks 14 entspricht. Wenn die zu messende Oberfläche P1 ideal reflektiert, so wird die Lichtintensität des Strahlenbündels 24 in etwa vollkommen vom Zeilensensor 16 mit seinen mittigen Fotodetektoren 18 erfasst und es ergibt sich eine Intensitätsverteilung im Kennlinienfeld 32 mit dem Intensitätsverlauf I(i).

Im unteren Bildteil ist nun die Erfassung der Strahlungsintensität bei Verkippung um den Winkel $\delta$ ($\delta \neq 0$) der Oberfläche P1 gegenüber der Messachse 20 des Sensors 10 in Richtung quer zur Längsachse 22 des Zeilensensors 16 gezeigt. Demgemäß wandert der spekulare Reflex 28 quer zur Längsachse 22 aus und ein spekularer Anteil 34 wird vom Zeilensensor 16 nicht mehr erfasst. Demgemäß ergibt sich im Kennlinienfeld 36 eine Abschwächung der Intensitätsverteilung I(i). Die Auswirkung auf die Intensitätsverteilung betreffend das Streulicht ist deutlich geringer und kann sogar vernachlässigt werden. Ein wesentlicher Gedanke der Erfindung ist nun, die Minderung der Intensität infolge der Verkippung um den Winkel $\delta$ so zu korrigieren, dass eine Intensitätsverteilung wie im Kennlinienfeld 32 für den spekularen Reflex angenommen werden kann, um dann auf der Grundlage dieser korrigierten Intensitätsverteilung die Kennwertberechnung, beispielsweise für den Aq-Wert, durchzuführen.

Ein wichtiges Ausführungsbeispiel der Erfindung ist dadurch gekennzeichnet, dass Korrekturfaktoren zum Korrigieren der Signale der Fotodetektoren 18 durch mathematische Modellierung bei Kenntnis des Kippwinkels $\delta$ und unter der Annahme eines kreisförmigen Reflexes ermittelt werden.

Gemessen wird die Intensitätsverteilung $I_i$, woraus der Rauheitskennwert Aq nach der Formel:

$$(1) \quad Aq = k \cdot \sum_{i=1}^{n} \left(I_i - M\right)^2 \cdot \frac{I_i}{\sum_{i=1}^{n} I_i}$$

berechnet wird, worin k ein Normierungsfaktor und M die mittlere Lage der Streuwinkelverteilung (siehe hierzu VDA 2009) ist.

Insbesondere bei sehr glatten Oberflächen ist der spekulare Anteil bei der Intensitätsverteilung $I_i$ sehr groß, was zur Folge hat, dass bei einer geringen Verkippung der zu messenden Oberfläche mit ihrer Flächennormalen um $\delta$ gegenüber der Messachse 20 des Sensors 10 und senkrecht zur Längsachse des Zeilensensors 16 ein Teil des spekularen Reflexes nicht mehr auf die aktive Fläche des Zeilensensors 16 trifft. Der Aq-Wert wird dann falsch berechnet, obwohl die eigentliche Rauheitsinformation, die sich in einem weiten Winkelbereich außerhalb des spekularen Reflexes befindet, immer noch vom Zeilensensor 16 erfasst wird. Es ist nun möglich, aus geometrischen Betrachtungen einen einzigen Korrekturfaktor x zu ermitteln und mit Hilfe dieses Korrekturfaktors x eine Intensitätsverteilung $I'_i$ zu berechnen, die näherungsweise der wahren Intensitätsverteilung $I_i$ ohne Verkippung ($\delta = 0$) entspricht.

Kennt man die Verkippung $\delta$ der Probe, so kann man den fehlenden Anteil 34 vom gesamten spekularen Reflex 28 berechnen. Hierzu berechnet man zunächst den Verkippweg y auf den Fotodetektoren 18, der sich bei kleinen Winkeln von $\delta$ und aufgrund des verwendeten f-Theta-Objektivs O nach der Gleichung

$$(2) \qquad y \approx f \cdot 2\delta$$

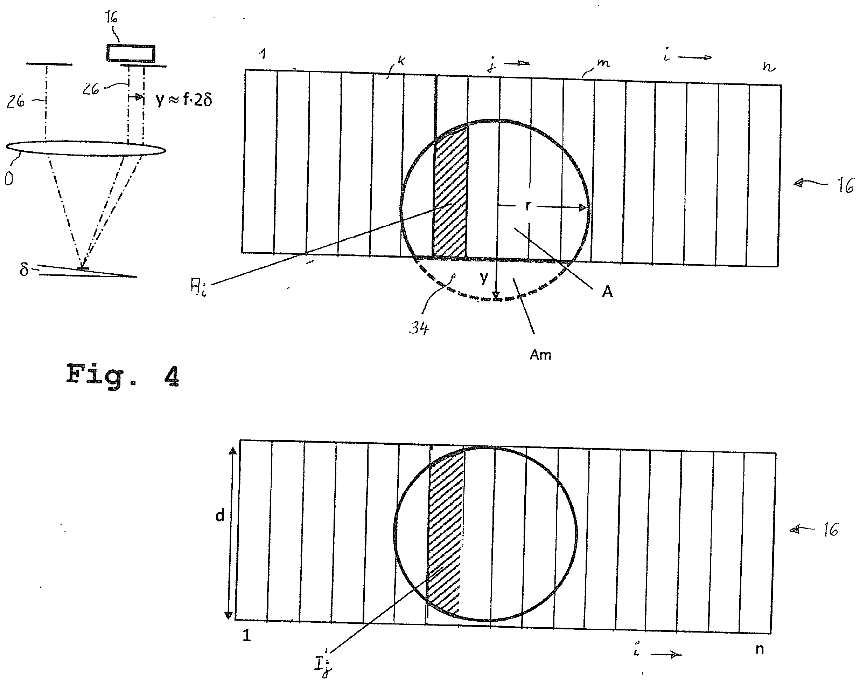

ergibt. Der spekulare Reflex 28 in der Ebene des Zeilensensors 16 ist eine Kreisscheibe mit dem Radius r = d/2. Der Anteil 34 vom spekularen Reflex, der nicht auf den Zeilensensor 16 trifft, ergibt sich nach Figur 4 und der bekannten Formel für den Kreisabschnitt Am zu:

$$(3) \qquad Am = r^2 \cos^{-1}\left(1 - \frac{y}{r}\right) - \sqrt{y(2r-y)}\,(r-y) \quad,$$

worin Am die Fläche des Kreisabschnitts 34 ist (siehe Figur 3), dessen auf ihn auftreffende Intensität vom Zeilensensor 16 nicht erfasst wird.

Bei gleichmäßiger Intensitätsverteilung im reflektierten Strahlenbündel sind die von den Fotodetektoren i tatsächlich erfassten Intensitäten $I_i$ direkt proportional den jeweiligen beleuchteten Flächenelementen $A_i$. Bezogen auf die volle Kreisfläche $r^2 \cdot \pi$ kennt man damit den Anteil 34 des spekularen Reflexes der nicht auf den Zeilensensor 16 trifft. Der tatsächlich gemessene Anteil G des spekularen Reflexes ist der Fläche A direkt proportional und setzt sich aus der Summe der Intensitätswerte $I_j$ mit j als Laufvariable von k bis m jener Fotodetektoren zusammen, die vom spekularen Reflex 28 auf dem Zeilensensor 16 getroffen werden, nämlich

$$G = \sum_{j=k}^{m} I_j \quad \sim \quad A \qquad (4)$$

worin j Anzahl der Fotodetektoren 18 ist, die vom spekularen Reflex getroffen werden.

Ein Korrekturfaktor x, um aus den gemessenen Intensitäten $I_j$ die korrigierten Intensitäten $I'_j$ zu erhalten, die ohne Verkippung ($\delta = 0$) vorhanden wären, ergibt sich aus den Flächenverhältnissen zu:

$$x A_i = A_{mi} + A_i , \qquad (5)$$

worin $A_i$ die auf dem Zeilensensor 16 des Fotodetektors i tatsächlich beleuchtete Fläche und $A_{mi}$ der zugehörige nicht beleuchtete Flächenanteil des Fotodetektors i ist,

woraus folgt $\quad x = \dfrac{A_{mi}}{A_i} + 1$ .

Da sich die Teilflächen $A_{mi}/A_i$ wie die Gesamtflächen $A_m/A_i$ verhalten

$$\frac{A_i}{A_{mi}} = \frac{A}{A_m} , \qquad (6)$$

erhält man für die korrigierte Intensität $I'_j = x \cdot I_j$ oder

$$I'_j = I_j \left( \frac{A_m}{A} + 1 \right) . \qquad (7)$$

Für die mittig auf dem Zeilensensor angeordneten Fotodetektoren j mit j von k bis m (z.B. insgesamt fünf Fotodetektoren) bleibt der Korrekturfaktor x konstant. Für die weiteren Fotodetektoren $i \neq j$ ist eine Korrektur nicht erforderlich, bzw. x = 1. Somit kann durch eine relativ einfache Rechnung ein Intensitätsverlauf $I'_i$ rekonstruiert werden, wie er ohne Verkippung ($\delta = 0$) vorhanden wäre. Dieser Intensitätsverlauf $I'_i$ ist dann Ausgangspunkt für die weitere Berechnung von statistischen Kennwerten wie Aq, M, Ask etc. über die Oberflächenbeschaffenheit.

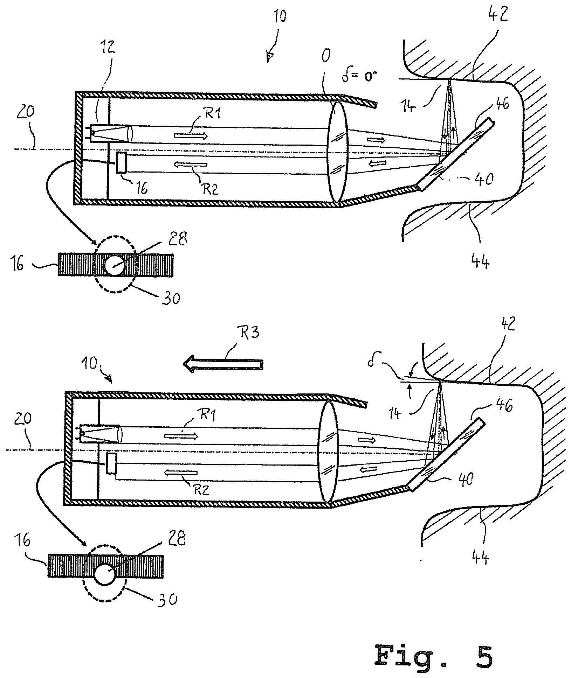

Figur 5 zeigt ein wichtiges Anwendungsbeispiel bei der Messung der Längsrauheit der Flanke eines Zahnrads. Der Sensor 10 ist hier mit einem Spiegelaufsatz 40 versehen, der in den Raum zwischen zwei Flanken 42, 44 eintaucht. Das in Richtung R1 von der Lichtquelle 12 einfallende Licht wird an der Oberfläche des Spiegels 46, um 90° umgelenkt und trifft als Messfleck 14 auf die Oberfläche der Flanke 42. Das direkt und streuend reflektierte Licht wird wiederum an der Spiegeloberfläche 46 umgelenkt und gelangt in Richtung R2 zum Zeilensensor 16, dessen aktive Fläche senkrecht zur Papierebene angeordnet ist, wie dies schematisch gesondert dargestellt ist. Die Messachse 20 des Sensors 10 ist durch den Spiegel 46 um 90° umgelenkt (in anderen Anwendungsbeispielen kann eine Umlenkung auch um andere Winkelgrade erfolgen). Die Flanke 42 in Figur 5 oben verläuft hier senkrecht zur umgelenkten Messachse 20, d.h. der Verkippwinkel $\delta$ beträgt 0°, so dass die Flächennormale der Flanke 42 mit der Messachse 20 am Ort des Messflecks 14 übereinstimmt. Im unteren Bildteil ist der Sensor 10 zur Messung in Richtung R3 verschoben, so dass der Messfleck 14 in einem Bereich der Flanke 42 auftrifft, in welchem die Flächennormale nicht mehr mit der Messachse 20 übereinstimmt, sondern um einen Winkel $\delta$ verkippt ist. Auf der aktiven Fläche des Zeilensensors 16 wandert der spekulare Reflex 28 aus und wird nicht mehr vollständig vom Zeilensensor 16 erfasst. Die Kenntnis der Oberflächenbeschaffenheit in diesem Bereich der Flanke 42 ist für die Oberflächenfunktion sehr wichtig. Eine Verkippung des Sensors 10 um einen Winkel derart, dass seine Messachse 20 senkrecht auf dem Messfleck 14 stehen würde, ist aufgrund des beengten Raumes technisch aufwendig und schwierig. Die Geometrieverhältnisse für die Flanke 42 und auch die geometrische Position des Messflecks 14, sind andererseits exakt bekannt und es kann eine Korrektur des Intensitätsverlaufes $I_j$ gemäß den zuvor beschriebenen Verfahrensschritten durchgeführt werden, wodurch mit einer sehr guten Näherung statistische Kenngrößen über die Oberflächenbeschaffenheit auch an dieser schwierigen Messstelle der Flanke 42 ermittelt werden können.

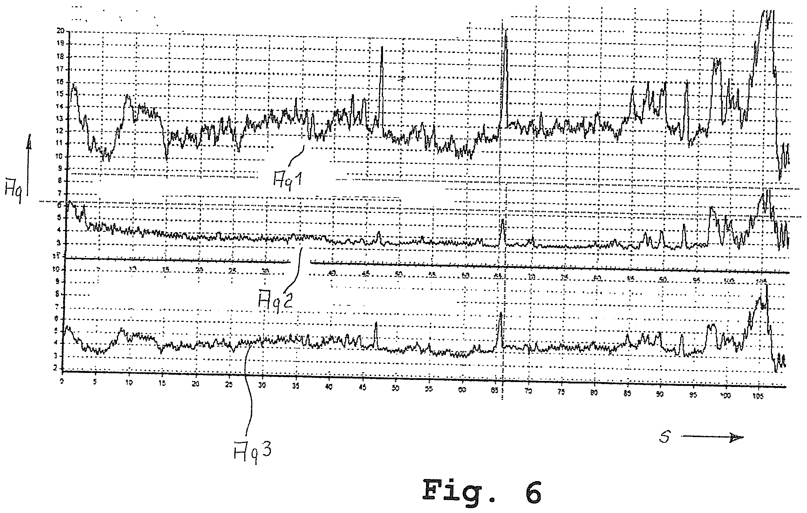

Figur 6 zeigt den Verlauf von Aq-Werten über den Messweg s, die mit dem optischen Sensor 10 an einer Probe gemessen wurden. Längs dieses Messwegs s, z.B. einer Linie entlang einer Flanke eines Zahnrades wie in Figur 5, werden z.B. 1000 Abtastungen vorgenommen und 1000 Aq-Werte ermittelt. Die obere Kennlinie zeigt den Verlauf von Aq1 bei einer Verkippung um den Winkel δ derart, dass die Intensität des spekularen Reflexes zu 50 % vom Zeilensensor nicht erfasst wird. Das Ergebnis sind fehlerhafte Aq1-Werte. Die mittlere Kennlinie zeigt den Verlauf von Aq2-Werten, wobei der Sensor 10 exakt senkrecht zur Oberfläche ausgerichtet ist, so dass seine Messachse mit der Flächennormalen der Oberfläche übereinstimmt. Diese Aq2-Werte sind die wahren Werte der Oberfläche. Die untere Kennlinie zeigt Aq3-Werte, bei denen das Verfahren nach der vorliegenden Erfindung angewandt und die Intensitätsverteilung korrigiert wurde. Es ist zu erkennen, dass die Aq2-Werte (die wahren Werte) sehr gut mit den Aq3-Werten übereinstimmen, was die hohe Näherungsgenauigkeit für das vorliegende Verfahren nach der Erfindung wiedergibt.

Bezugszeichenliste

| | |
|---|---|
| 10 | Sensor |
| 12 | Lichtquelle |
| 14 | Messfleck |
| d | Durchmesser des Messflecks |
| P1 | Oberfläche |
| α | maximal messbarer Streuwinkelbereich |
| O | Messobjektiv |
| 16 | Zeilensensor |
| 18 | Fotodetektoren |
| φ | Streuwinkelwerte |
| Iφ' | Intensitätswerte |
| H1(φ') | Intensitätsverteilung |
| H(φ') | Streuwinkelverteilung |
| F1 | Flächennormale |
| 20 | Messachse |
| Δ1 | Winkel |
| 22 | Längsachse des Zeilensensors |
| M1 | Verschiebung gegenüber der mittleren Lage der Intensitätsverteilung |
| P2 | Oberfläche |
| H2(φ') | Intentsitätsverteilung |
| Δ2 | Verkippwinkel |
| M2 | Verschiebung |
| Aq | Varianz der Streuwinkelverteilung; Rauheitswert |
| Ask | Profilschiefe der Mikrostruktur |
| 23 | Kollimatorlinse |
| 24 | Strahlenbündel |
| f, f' | Brennweiten |
| δ | Winkel |
| 26 | Mittelstrahl des Strahlenbündels |
| y | Verschiebemaß |
| 28 | spekularer Reflex |
| 30 | Streulicht |
| n, m, k | Anzahl der Fotodetektoren |
| i, j | Laufvariable; Nummer des Fotodetektors |
| I(i), $I_i$, $I_j$ | Intensitätsverlauf über die Laufvariable i bzw. j |
| 32 | Kennlinienfeld |
| 34 | spekularer Anteil |
| 36 | Kennlinienfeld |
| 40 | Spiegelaufsatz |
| 42,44 | Flanken |
| 46 | Spiegel |
| r | Radius |
| Am | Fläche des Kreisabschnitts |
| Ami | zugehöriger Flächenanteil für Fotodetektor i |

A        Fläche des spekularen Reflexes
x        Korrekturfaktor
Aq1     Werte ohne Korrektur
Aq2     wahre Werte
Aq3     korrigierte Werte

**Patentansprüche**

1. Verfahren zur berührungslosen Beurteilung der Beschaffenheit einer Oberfläche nach der winkelaufgelösten Streulichtmesstechnik,
bei dem ein optischer Sensor (10) ein Strahlenbündel (24) mit definierter Intensitätsverteilung auf die zu beurteilende Oberfläche (P1) aussendet und einen Messfleck (14) beleuchtet, und die zurückreflektierte Intensität ($I_i$) der Strahlung mittels eines Zeilensensors (16) mit einer diskreten Anzahl (i) von Fotodetektoren (18) in einem definierten Winkelbereich ($\alpha$) erfasst wird, wobei der Messfleck (14) und seine Flächennormale (F1) um einen Winkel $\delta$ gegen eine Messachse (20) des Sensors (10) und quer zur Längsachse (22) des Zeilensensors (16) derart verkippt sind, dass das vom Messfleck (14) spiegelnd reflektierte Strahlenbündel (28) nicht mehr vollständig auf den Zeilensensor (16) auftrifft, wobei die Intensitäten ($I_j$) einer Anzahl (j) von Fotodetektoren (18), die spiegelnd reflektiertes Licht empfangen, abhängig von diesem Winkel $\delta$ durch Anhebung der Intensitäten dieser Fotodetektoren (18) um Korrekturfaktoren als wäre keine Verkippung vorhanden rechnerisch korrigiert und die Intensitäten der verbleibenden Fotodetektoren (18) nicht korrigiert werden, und aus den korrigierten Intensitäten ($I'_j$) und aus den nicht korrigierten Intensitäten ($I_i$) der Fotodetektoren (18) statistische Kennwerte (Aq) für die Oberflächenbeschaffenheit berechnet werden,
wobei eine Korrektur der gemessenen Intensitäten ($I_i$) von Fotodetektoren (18) für $\delta$-Werte im Bereich von 0,2 bis 4° durchgeführt wird.

2. Verfahren nach Anspruch 1, **dadurch gekennzeichnet, dass** die gemessenen Intensitäten ($I_j$) von denjenigen Fotodetektoren (18) korrigiert werden, die im mittleren Abschnitt des Zeilensensors (16) liegen, vorzugsweise 20 - 50 % der gesamten Anzahl von Fotodetektoren (18).

3. Verfahren nach Anspruch 1 oder 2, **dadurch gekennzeichnet, dass** die gemessenen Intensitäten ($I_j$) von denjenigen Fotodetektoren (18) korrigiert werden, welche bei ideal reflektierender ebener Oberfläche das gespiegelt reflektierte Strahlenbündel erfassen, und dass die Intensitäten ($I_i$) der Signale der weiteren Fotodetektoren (18) nicht korrigiert werden.

4. Verfahren nach Anspruch 1 oder 2, **dadurch gekennzeichnet, dass** Korrekturfaktoren zum Korrigieren der Intensitäten ($I_i$) von Fotodetektoren (18) durch Einmessen mit verschiedenen Verkippwinkeln $\delta$ ermittelt werden.

5. Verfahren nach einem der vorhergehenden Ansprüche, **dadurch gekennzeichnet, dass** Korrekturfaktoren zum Korrigieren der Signale von Fotodetektoren (18) durch mathematische Modellierung unter der Annahme eines kreisförmigen Reflexes (28) ermittelt werden.

6. Verfahren nach Anspruch 5, **dadurch gekennzeichnet, dass** ein einziger Korrekturfaktor (x) für mehrere Intensitäten ($I_j$) von Fotodetektoren (18) aus einer geometrischen Flächenbeziehung beleuchteter Fläche (A) und nicht beleuchteter Fläche (Am) abhängig vom Kippwinkel $\delta$ berechnet wird.

7. Verfahren nach Anspruch 6, **dadurch gekennzeichnet dass** der Korrekturfaktor (x) nach der Beziehung

$$x = 1 + \frac{Am}{A^\cdot}$$

ermittelt wird, wobei die Intensität des kreisförmigen Reflexes (28) gleichmäßig verteilt ist.

8. Verfahren nach einem der vorhergehenden Ansprüche, **dadurch gekennzeichnet, dass** zum Ermitteln statistischer Kennwerte (Aq) für die Querrauheit der optische Sensor (10) mit seiner Messachse (20) in Bezug auf die zu beurteilende Oberfläche so ausgerichtet wird, dass die Längsachse (22) des Zeilensensors (16) quer zur Bearbeitungsrichtung der Oberfläche (P1) ausgerichtet ist.

9. Verfahren nach einem der vorhergehenden Ansprüche, **dadurch gekennzeichnet, dass** zum Ermitteln statistischer Kennwerte für die Längsrauheit der optische Sensor (10) mit seiner Messachse (20) in Bezug auf die zu beurteilende Oberfläche (P1) so ausgerichtet wird, dass die Längsachse (22) des Zeilensensors (16) parallel zur Bearbeitungsrichtung der Oberfläche ausgerichtet ist.

10. Verfahren nach einem der vorhergehenden Ansprüche, **dadurch gekennzeichnet, dass** eine Korrektur der ge-messenen Intensitäten ($I_i$) von Fotodetektoren (18) für $\delta$- Werte im Bereich von 0,2 bis 3° durchgeführt wird.

**Claims**

1. A method for the contactless assessment of the quality of a surface according to the angle-resolved scattered light measuring technique,
   in which an optical sensor (10) emits a beam of rays (24) with defined intensity distribution onto the surface (P1) to be assessed and illuminates a measuring spot (14), and
   the reflected intensity ($I_i$) of the radiation is detected by a line sensor (16) with a discrete number (i) of photodetectors (18) in a defined angular range (a),
   wherein the measuring spot (14) and its surface normal (F1) are tilted by an angle $\delta$ with respect to a measuring axis (20) of the sensor (10) and transversely to the longitudinal axis (22) of the line sensor (16) such that the beam of rays (28) mirror-reflected by the measuring spot (14) is no longer completely incident on the line senor (16),
   wherein the intensities ($I_j$) of a number (j) of photodetectors (18) which receive mirror-reflected light are corrected calculation-wise dependent on this angle $\delta$ by increasing the intensities of these photodetectors (18) by correction factors as if there were no tilting and the intensities of the remaining photodetectors (18) are not corrected,
   and from the corrected intensities ($I'_j$) and from the non-corrected intensities ($I_i$) of the photodetectors (18) statistic characteristic values (Aq) for the surface quality are calculated,
   wherein a correction of the measured intensities ($I_i$) of photodetectors (18) is performed for $\delta$ values in the range from 0.2 to 4°.

2. The method according to claim 1, **characterized in that** the measured intensities ($I_j$) of those photodetectors (18) are corrected that lie in the medium section of the line sensor (16), preferably 20 - 50 % of the entire number of photodetectors (18).

3. The method according to claim 1 or 2, **characterized in that** the measured intensities ($I_j$) of those photodetectors (18) are corrected that, given an ideally reflecting plane surface, detect the mirror-reflected beam of rays, and that the intensities ($I_i$) of the signals of the further photodetectors (18) are not corrected.

4. The method according to claim 1 or 2, **characterized in that** correction factors for correcting the intensities ($I_i$) of photodetectors (18) are determined by calibration with different tilt angles $\delta$.

5. The method according to one of the preceding claims, **characterized in that** correction factors for correcting the signals of photodetectors (18) are determined by mathematical modeling on the assumption of a circular reflex (28).

6. The method according to claim 5, **characterized in that** a single correction factor (x) is calculated for several intensities ($I_j$) of photodetectors (18) from a geometrical surface relationship of illuminated surface (A) and non-illuminated surface (Am) dependent on the tilt angle $\delta$.

7. The method according to claim 6, **characterized in that** the correction factor (x) is determined according to the relationship

$$x = 1 + \frac{Am}{A}$$

wherein the intensity of the circular reflex (28) is uniformly distributed.

8. The method according to one of the preceding claims, **characterized in that** for determining statistic characteristic values (Aq) for the cross roughness, the optical sensor (10) with its measuring axis (20) is oriented such with respect to the surface to be assessed that the longitudinal axis (22) of the line sensor (16) is oriented transversely to the machining direction of the surface (P1).

9. The method according to one of the preceding claims, **characterized in that** for determining statistic characteristic values for the longitudinal roughness, the optical sensor (10) with its measuring axis (20) is oriented such with respect to the surface (P1) to be assessed that the longitudinal axis (22) of the line sensor (16) is oriented parallel to the machining direction of the surface.

10. The method according to one of the preceding claims, **characterized in that** a correction of the measured intensities ($I_i$) of photodetectors (18) is performed for δ values in the range from 0.2 to 3°.

**Revendications**

1. Procédé d'évaluation sans contact de l'état d'une surface selon la technique de mesure utilisant la lumière diffusée à résolution angulaire,
selon lequel un capteur optique (10) émet un faisceau lumineux (24) présentant une répartition des intensités définie sur la surface (P1) à évaluer et éclaire un point de mesure (14),
et
l'intensité (Ii) réfléchie du rayonnement est détectée dans une plage angulaire (α) définie au moyen d'un capteur linéaire (16) présentant un nombre discret (i) de photodétecteurs (18),
dans lequel le point de mesure (14) et sa normale à la surface (F1) sont inclinés selon un angle δ par rapport à un axe de mesure (20) du capteur (10) et transversalement à l'axe longitudinal (22) du capteur linéaire (16), de telle sorte que le faisceau lumineux (28) réfléchi de manière spéculaire par le point de mesure (14) n'est plus entièrement incident sur le capteur linéaire (16), dans lequel les intensités ($I_j$) d'un nombre (j) de photodétecteurs (18), qui reçoivent la lumière réfléchie de manière spéculaire, sont corrigées arithmétiquement de facteurs de correction comme si aucune inclinaison n'était présente, en fonction de cet angle δ, en rehaussant les intensités de ces photodétecteurs (18), et des valeurs caractéristiques statistiques (Aq) pour l'état de la surface sont calculées à partir des intensités corrigées ($I'_j$) et des intensités ($I_i$) non corrigées des photodétecteurs (18),
dans lequel une correction des intensités ($I_i$) mesurées des photodétecteurs (18) est réalisée pour des valeurs de δ dans la plage de 0,2 à 4°.

2. Procédé selon la revendication 1, **caractérisé en ce que** les intensités ($I_j$) mesurées des photodétecteurs (18) qui se situent dans la partie centrale du capteur linéaire (16), de préférence de 20-50% du nombre total des photodétecteurs (18), sont corrigées.

3. Procédé selon la revendication 1 ou 2, **caractérisé en ce que** les intensités ($I_j$) mesurées des photodétecteurs (18) qui détectent le faisceau lumineux réfléchi de manière spéculaire dans le cas d'une surface plate idéalement réfléchissante sont corrigées, et **en ce que** les intensités ($I_i$) des signaux des autres photodétecteurs (18) ne sont pas corrigées.

4. Procédé selon la revendication 1 ou 2, **caractérisé en ce que** les facteurs de correction destinés à corriger les intensités ($I_i$) des photodétecteurs (18) sont déterminés par mesure à différents angles d'inclinaison δ.

5. Procédé selon l'une quelconque des revendications précédentes, **caractérisé en ce que** les facteurs de correction destinés à corriger les signaux de photodétecteurs (18) sont déterminés par modélisation mathématique dans l'hypothèse d'un reflet circulaire (28).

6. Procédé selon la revendication 5, **caractérisé en ce qu'**un facteur de correction unique (x) pour plusieurs intensités ($I_j$) de photodétecteurs (18) est calculé à partir d'une relation géométrique entre la surface éclairée (A) et la surface non éclairée (Am) en fonction de l'angle d'inclinaison δ.

7. Procédé selon la revendication 6, **caractérisé en ce que** le facteur de correction (x) est déterminé selon la relation

$$x = 1 + \frac{Am}{A}$$

dans lequel l'intensité du reflet circulaire (28) est répartie de façon homogène.

**8.** Procédé selon l'une quelconque des revendications précédentes, **caractérisé en ce que**, pour déterminer les valeurs caractéristiques statistiques (Aq) pour la rugosité transversale, le capteur optique (10) est orienté avec son axe de mesure (20) par rapport à la surface à évaluer, de telle sorte que l'axe longitudinal (22) du capteur linéaire (16) soit orienté transversalement à la direction d'usinage de la surface (P1).

**9.** Procédé selon l'une quelconque des revendications précédentes, **caractérisé en ce que**, pour déterminer les valeurs caractéristiques statistiques pour la rugosité longitudinale, le capteur optique (10) est orienté avec son axe de mesure (20) par rapport à la surface (P1) à évaluer, de telle sorte que l'axe longitudinal (22) du capteur linéaire (16) soit orienté parallèlement à la direction d'usinage de la surface.

**10.** Procédé selon l'une quelconque des revendications précédentes, **caractérisé en ce qu'**une correction des intensités ($I_i$) mesurées des photodétecteurs (18) est réalisée pour des valeurs de $\delta$ dans la plage de 0,2 à 3°.

FIG. 1

EP 3 023 737 B1

Fig. 2

Fig. 3

Fig. 4

EP 3 023 737 B1

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014111320
- EP 0210263 A1

- EP 0145957 A